# EUROPEAN PATENT SPECIFICATION

(11) **EP 1 685 980 B1**
(45) Date of publication and mention of the grant of the patent: **10.08.2011**
(21) Application number: 06100742.3
(22) Date of filing: 24.01.2006
(51) Int. Cl.: B60C 1/00, C08K 5/3415, C08K 3/00, C08L 9/00, C08J 5/10, C08L 61/12, C08L 61/26

(54) **Tire with internal cord reinforced rubber component**
Reifen mit einem mit Kord verstärkten inneren Bauteil
Pneu contenant un élément interne renforcé de câbles

(30) Priority: 28.01.2005 US 46479
(43) Date of publication of application: 02.08.2006
(73) Proprietor: The Goodyear Tire & Rubber Company, Akron, OH 44316-0001 (US)
(72) Inventor: Sandstrom, Paul Harry, 44223, Cuyahoga Falls (US)
(74) Representative: Kutsch, Bernd

(56) References cited:
- EP-A- 0 900 820
- EP-A- 1 323 549
- US-A- 3 957 718
- US-A- 4 818 601
- US-A- 4 933 385

## Description

### Field of the Invention

This invention relates to a tire having an internal component, exclusive of a visible surface of the tire, comprising a composite of a cord reinforced rubber composition having a relatively low, silica-rich, reinforcing filler content comprising precipitated silica and rubber reinforcing carbon black, together with silica coupler, in combination with methylene donor compound, methylene acceptor compound, cobalt salt and metaphenylene bismaleimide. Such cord reinforced tire component may be, for example, at least one of a tire carcass ply and circumferential overlay ply and/or circumferential belt ply underlying its tread. The composite of cord reinforced rubber composition may also optionally contain one or more of particulate starch/plasticizer composite and exfoliated clay platelets.

### Background of the Invention

Pneumatic rubber tires conventionally contain various internal components contained within the tire in a form of cord-reinforced rubber composites which are exclusive of visible surfaces of the tire, which are relied upon to reinforce and/or stabilize various aspects of the tire. Such internal components include, for example, a carcass ply, a circumferential belt ply which underlies the circumferential tread component of the tire and a circumferential overlay ply which also underlies the circumferential tire tread as being positioned between the tire tread and said belt ply.

It is sometimes desired to provide a tire with one or more of such internal components, or plies of cord reinforced rubber composites, having a relatively low hysteresis while substantially maintaining other desirable physical properties in order to contribute to a reduction in a tire's rolling resistance and hence promoting a reduction in vehicular fuel consumption for an associated vehicle on which the tire is operationally mounted and for which it may be desired to promote improved durability for the tire.

For such purpose, a cord reinforced rubber composite is provided herein of relatively low reinforcing filler content to promote an increase in its 100°C rebound physical property, as compared to a similar rubber composition with a relatively high reinforcing filler content, with an associated predictive reduction in its hysteresis physical property.

However, it is desired herein to also provide such rubber composition of such cord reinforced rubber composite in which the reinforcing filler content is primarily composed of precipitated silica with other physical property(ies) enhanced by inclusion of a combination of methylene donor compound, methylene acceptor compound, cobalt salt and metaphenylene bismaleimide.

The rubber composition of such cord reinforced rubber composite may also contain a starch/plasticizer composite. Rubber compositions containing a starch/plasticizer composite in combination with a methylene donor and/or methylene acceptor are referred to in US-B- 6,391,945.

The rubber composition of such cord reinforced rubber composite may also contain exfoliated clay platelets derived from an intercalated clay such as, for example, a montmorillonite clay.

In the description of this invention, the term "phr" where used means "parts of material by weight per 100 parts by weight of rubber". The terms "rubber" and "elastomer" may be used interchangeably unless otherwise indicated. The terms "rubber composition" and "compound" may be used interchangeably unless otherwise indicated.

EP-A- 0 900 820 describes a rubber compound containing a hydrated thiosulfate and a bismaleimide which improves adhesion to aramid reinforcement.

US-A- 3,957,718 describes a silica containing rubber mixture for the improvement of the adhesion of natural and/or synthetic rubber to reinforcing fillers or supports of textile and/or metallic fabrics after vulcanization.

EP-A- 1 323 549 discloses a tire with a carcass ply or carcass belt component comprising natural rubber-rich diene-based rubber which contains 30-60 phr of precipitated silica and from 1-10 phr of carbon black.

### Summary and Practice of the Invention

In accordance with this invention a tire is provided having at least one internal component (exclusive of an outer surface of the tire) comprising a cord reinforced natural rubber-rich rubber composite comprising:
(A) a rubber composition comprising, based upon parts by weight per 100 parts by weight rubber (phr):
   (1) at least one conjugated diene-based rubber comprising:
      (a) 100 phr, alternatively from 60 to 100 phr, of cis 1,4-polyisoprene rubber, and
      (b) from zero to 40 phr of at least one additional rubber selected from cis 1,4-polybutadiene rubber, styrene/butadiene copolymer rubber, medium vinyl polybutadiene rubber having a vinyl 1,2-content in a range of from 30 to 80 percent, and trans 1,4-polybutadiene rubber having a trans 1,4-isomeric content in a range of from 50 to 80 percent;
   (2) 25 to 55, alternately from 30 to 50, phr of reinforcing filler comprised of:
      (a) 20 to 48, alternately from 25 to 40, phr of precipitated silica,
      (b) 2 to 20, alternatively 4 to 15, phr of rubber reinforcing carbon black;
         wherein the weight ratio of said precipitated silica and said rubber reinforcing carbon black is in a range of from 2/1 to 10/1, alternately from 3/1 to 8/1,
         wherein, said reinforcing filler may optionally additionally contain from 2 to 15 phr of at least one of starch/plasticizer composite and exfoliated clay platelets derived from intercalated clay comprised of montmorillonite clay, and
      (c) a coupling agent for said silica having a moiety reactive with hydroxyl groups (e.g. silanol groups) on said precipitated silica and another different moiety interactive with said conjugated diene based rubber(s),
      (d) a resinous reaction product of a methylene donor compound comprised of hexamethoxymethylmelamine and a methylene acceptor compound, (wherein the resinous reaction product is desirably formed in situ within the rubber composition by adding the methylene donor compound and methylene acceptor compound individually to the rubber composition),
      (e) cobalt salt selected from at least one of cobalt naphthenate, cobalt salts of fatty acids, cobalt salts of aliphatic or alicyclic carboxylic acids having from 6 to 30 carbon atoms; cobalt neodecanoate; cobalt chloride; cobalt carboxylate and organo-cobalt-boron complexes, preferably cobalt naphthenate, and
      (f) metaphenylene bismaleimide,
(B) at least one cord, preferably a plurality of parallel cords aligned substantially parallel to each other and encapsulated by said rubber composition,
   wherein said cords individually comprise at least one filament, alternately a plurality of cabled, or twisted, filaments,
   wherein said filament(s) of said cord individually comprise at least one filament comprising at least one of steel or brass coated steel.

As previously mentioned, said tire internal component of cord reinforced/rubber composite may be, for example one or more of a carcass ply, circumferential belt ply and circumferential overlay ply.

It is considered herein that an internal tire component as a medium to heavy truck tire carcass ply is particularly useful and adaptable where the cord of said cord reinforced/rubber composite is a plurality of brass coated steel cords aligned substantially parallel to each other, which may comprise a plurality of brass coated steel filaments, and wherein the rubber is preferably cis 1,4-polyisoprene rubber which may be natural or synthetic, often preferably synthetic, cis 1,4-polyisoprene rubber, particularly where such truck tire may be intended to be useful for relatively heavy duty use, such as for example vehicular hauling of relatively heavy loads.

It is further considered herein that an internal tire component as a passenger or light truck tire carcass ply is particularly useful and adaptable where the cord of said cord reinforced /rubber composite is plurality of polyester cords, aligned substantially parallel to each other, comprising a plurality of twisted polyester filaments, where such passenger or light truck tire may be intended to be useful for relatively light vehicular loads. The rubber may comprise cis 1,4-polyisoprene and styrene/butadiene copolymer rubber.

The methylene donor compound for the rubber composition of the cord reinforced rubber composite comprises hexamethoxymethylmelamine. In practice, if desired, said methylene donor compound may also consist of a minor amount (less than 50 weight percent of the hexamethoxymethylmelamine) of one or more of additional methylene donor compounds selected from for example, one or more of, hexamethylenetetramine, methoxymethyl)melamaine, N,N'N"-trimethyl N,N'N"-trimethylolmelamine, hexamethylomelanime, N,N'N"-dimethylolmelamine, N-methylolmelamine, N,N'-dimethylolmelamine, N,N'N"-tris(methoxymethyl)melamine, N,N'N"-tributyl-N,N'N"-trimethylol-melamine and hexaethoxymethylmelamine. However, preferably the methylene donor compound is hexamethoxymethylmelamine.

The amount of the methylene donor compound in the rubber composition may vary. For example, it may be contained, as a component of said resinous reaction product of methylene donor and methylene acceptor, in the rubber composition in an amount in a range of from 0.5 to 4 phr.

The term "methylene acceptor" is known to those having skill in such art and is used to describe the reactant, or compound with which the methylene donor compound reacts to form what is believed to be an intermediate methylol monomer. It is envisioned that a condensation of the intermediate methylol monomer by formation of a methylene bridge produces a resin material. The initial reactant for which it is envisioned contributes the moiety that later forms the methylene bridge and ultimately the resin is referred to as being the methylene donor compound and the other reactant is referred to as being the methylene acceptor compound. Representative compounds which may be used as a methylene acceptor include, for example, but are not limited to, resorcinol, resorcinolic derivitives, monohydric phenols and their derivitives, dihydric phenols and their derivitives, polyhydric phenols and their derivitives, unmodified phenol novolak resins, modified phenol novolak resin, rescorcinol novolak resins, and mixtures thereof. Examples of methylene acceptors include, for example, those disclosed in US-B- 6,605,670, 6,472,457, 5,945,500, 5,936,056, 5,688,871, 5,665,799, 5,504,127, 5,405,897, 5,244,725, 5,206,389, 5,194,513, 5,030,692, 4,889,481, 4,605,696, 4,436,853 and 4,092,455. Examples of modified novolak resins include, for example, cashew nut oil (e.g. cashew nut shell oil) modified phenol novolak resin, tall oil modified phenol novolak resin and alkyl modified phenol novolak resin such as, for example, SP6700 ™. In one embodiment, the methylene acceptor compound is resorcinol.

The amount of methylene acceptor compound in the rubber composition may vary, depending somewhat upon selection and amount of methylene donor compound used as well as the selection of the methylene acceptor compound itself and a desired ratio of methylene donor compound to methylene acceptor compound. For example, the amount of methylene acceptor compound, as a component of said resinous reaction product of said methylene donor and methylene acceptor, may be in a range of from 0.5 to 5, alternatively from 1 to 3 phr.

A weight ratio of the methylene acceptor compound to methylene donor compound may range, for example, from 5/1 to 1/5.

Representative of cobalt salts, are, for example, cobalt salts of fatty acids such as, for example, stearic, palmitic, oleic, linoleic acids; cobalt salts of aliphatic or alicyclic carboxylic acids having from 6 to 30 carbon atoms; cobalt neodecanoate; cobalt chloride; cobalt naphthenate; cobalt carboxylate and orano-cobalt-boran complex such as, for example Manobond D™ from the Wyrough and Loser company. Oftentimes it is desired that the cobalt salt is comprised of cobalt naphthenate.

The amount of cobalt salt in the rubber composition may vary considerably, depending somewhat upon the cobalt selected. For example, it may range, for example, from zero (where its presence may not be required by this invention) to 5, alternately from 0.2 to 5 phr.

In practice, it is preferred that said rubber composite of said composite has a hot cured rebound property (100°C) in a range of from 65 to 85, alternately from 70 to 80.

In practice, it is desired that said rubber composition of said rubber/cord composite, so long as it has said hot rebound property (100°C) in a range of from 65 to 85, has a dynamic loss modulus (G') at a low strain (10 percent) and 100°C in a range of from 1400 to 2000 MPa, and a Shore A hardness (100°C) in a range of from 60 to 70. It may also be desired that said rubber composition has a tan delta at low strain (10 percent) and 60°C in a range of from 0.03 to 0.08.

In practice, the relatively low level of carbon black reinforcement for said rubber composition of said cord reinforced composite, namely a maximum of 20, alternately a maximum of 15, phr, as compared to what is considered herein as being a more normal 45 to 60 phr of rubber reinforcing carbon black, is provided in order to endeavor to achieve said aforesaid relatively high hot (100°C) rebound value (and correspondingly relatively low hysteresis) in a range for the rubber composition.

A significance of using natural rubber for the cis 1,4-polyisoprene rubber of the rubber composition of the cord reinforced rubber composite is to obtain a relatively high tear strength and good processability in combination with its relatively low hysteresis (relatively high hot rebound property).

A significance of using a combination of methylene donor compound and methylene acceptor compound for the rubber composition of the cord reinforced rubber composite is considered herein to be beneficial to promote high low strain stiffness (G' at 10 percent strain at 100°C) values for the rubber composition and good adhesion of the rubber composition to the reinforcing cord.

A significance of using the cobalt salt, particularly the cobalt naphthenate, for the rubber composition of the cord reinforced rubber composite is considered herein to be beneficial to promote high low strain stiffness (G' at 10 percent strain at 100°C) values and good cord adhesion where brass coated steel wire is used for the cord.

A significance of using the metaphenylene bismaleimide for the rubber composition of the cord reinforced rubber composite is considered herein to be beneficial to promote good low strain stiffness (G' at 10 percent strain at 100°C) while maintaining a balance between other physical properties of the rubber composition and which may also promote good adhesion of the rubber composition to nylon and polyester cord fibers.

A significance of using precipitated silica reinforcement, in combination with a silica coupling agent, is considered herein to be beneficial to promote low hysteresis and good tear strength for the rubber composition of the composite.

While any single one of the aforesaid ingredients in the tire component composite of cord reinforced rubber composition are known materials for use in various rubber compositions, a significant aspect of this invention is the required use of the combination of the ingredients for the cord reinforced rubber composite as an internal component of a tire, particularly a pneumatic rubber tire.

Various conventional compounding ingredients may be used in the preparation of the rubber composition of the cord reinforced rubber composite, so long as the cured rubber composition has the aforesaid hot (100°C) rebound property characteristic in a range of from 65 to 85.

For example, the sulfur cured rubber of the cord reinforced rubber composite may contain conventional additives including fillers which may include calcium carbonate, peptizing agents, pigments, stearic acid, accelerators, sulfur vulcanizing agents, antiozonants, antioxidants, processing oils, activators, initiators, plasticizers, waxes, pre-vulcanization inhibitors and extender oils. Representative of conventional accelerators may be, for example, amines, guanidines, thioureas, thiols, thiurams, sulfenamides, dithiocarbamates and xanthates which are typically added in amounts of from 0.2 to 3 phr. Representative of sulfur vulcanizing agents include element sulfur (free sulfur) or sulfur donating vulcanizing agents, for example, an amine disulfide, polymeric polysulfide or sulfur olefin adducts. The amount of sulfur vulcanizing agent will vary depending on the type of rubber and particular type of sulfur vulcanizing agent but generally range from 0.1 phr to 3 phr with a range of from 0.5 phr to 2 phr being preferred. Representative of the antidegradants which may be in the rubber composition include monophenols, bisphenols, thiobisphenols, polyphenols, hydroquinone derivatives, phosphites, phosphate blends, thioesters, naphthylamines, diphenol amines as well as other diaryl amine derivatives, para-phenylene diamines, quinolines and blended amines. Antidegradants are generally used in an amount ranging from 0.1 phr to 10 phr with a range of from 2 to 6 phr being preferred. Amine based antidegradants, however, are not preferred in the practice of this invention. Representative of a peptizing agent that may be used is pentachlorophenol which may be used in an amount ranging from 0.1 phr to 0.4 phr with a range of from 0.2 to 0.3 phr being preferred. Representative of processing oils which may be used in the rubber composition of the present invention include, for example aliphatic, naphthenic and aromatic oils. The processing oils may be used in a conventional amount ranging from 0 to 30 phr with a range of from 5 to 15 phr being more usually preferred. Initiators are generally used in a conventional amount ranging from 1 to 4 phr with a range of from 2 to 3 phr being preferred.

Accelerators may be used in a conventional amount. In cases where only a primary accelerator is used, the amounts range from 0.5 to 2 phr. In cases where combinations of two or more accelerators are used, the primary accelerator is generally used in amounts ranging from 0.5 to 1.5 phr and a secondary accelerator is used in amounts ranging from 0.1 to 0.5 phr. Various types of conventional accelerators include, for example, amines, disulfides, guanidines, thioureas, thiazoles, thiurams, sulfenamides, dithiocarbamates and xanthates. Preferably, the primary accelerator is a sulfenamide. If a secondary accelerator is used, it is preferably a guanidine, dithiocarbamate or thiuram compound such as for example diphenyl guanidine.

The practice of this invention is further illustrated by reference to the following examples which are intended to be representative rather than restrictive of the scope of the invention. Unless otherwise indicated, all parts and percentages are by weight.

### EXAMPLE I

Rubber samples were prepared to evaluate a suitable level, or content, and ratio of reinforcing silica and rubber reinforcing carbon black for a rubber composition of a cord reinforced rubber composite for an internal component of a tire, particularly a pneumatic tire in order to obtain a suitable hot (100°C) rebound property while substantially maintaining other desirable physical properties

The rubber samples are referred to herein as Samples A through H.

The rubber compositions were prepared by blending the ingredients in an internal rubber mixer in a series of sequential mixing steps while sheeting out the rubber mixtures and cooling to a temperature below 40°C between mixing steps. The sequential mixing steps were comprised of a first non-productive mixing step followed by a second non-productive mixing step and thence by a productive mixing step (in which sulfur and accelerators were added).

Such sequential non-productive and productive rubber mixing steps are well known to those having skill in such art.

The basic recipe for the rubber Samples A through H is presented in the following Table 1 in terms of parts by weight.

**Table 1**

| **First Non-Productive Mixing Step (mixed to 150°C)** | **Parts** |
|---|---|
| Natural cis 1,4-polyisoprene rubber | 100 |
| Carbon black ¹ | variable |
| Silica ² | variable |
| Silica coupling agent ³ | variable |
| Processing oil ⁴ | variable |
| Fatty acid ⁵ | 2 |
| Zinc oxide | 4 |
| Cobalt salt ⁶ | 2 |
| Methylene acceptor ⁷ | 2 |

| **Second Non-Productive Mixing Step (mixed to 160°C)** | |
|---|---|
| Rubber from first non-productive mixing step | variable |
| Carbon black ¹ | variable |
| Processing oil ⁴ | variable |

| **Productive Mixing Step (mixed to 108°C)** | |
|---|---|
| Antioxidant ⁸ | 0.75 |
| Zinc oxide | 3 |
| Sulfur ⁹ | 5 |
| Sulfenamide accelerator | 1.1 |
| Metaphenylene bismaleimide | 2 |
| Methylene donor ¹⁰ | 2.8 |

| | |
|---|---|
| ¹Carbon black as freely added rubber reinforcing carbon black N330, an ASTM reference, plus a minor amount of carbon black (also understood to be N330, or similar, carbon black) contained in the silica coupler composite. ²Precipitated silica as HiSil 210 from PPG Industries ³Silica coupler as a bis(3-triethoxysilylpropyl) polysulfide, understood to have an average of connecting sulfur atoms in its polysulfidic bridge in a range of from 2.2 to 2.5, provided as Si266™ from Degussa as a composite of the silica coupler and carbon black (believed to be N330 or similar carbon black) in a 50/50 weight ratio, reported in Table 1 in terms of the silica coupler and not the complete composite of coupler and carbon black. ⁴Flexon 641™ from ExxonMobil ⁵Primarily stearic acid as a blend of stearic, palmitic and oleic acids ⁶Cobalt naphthenate, 10.5 percent by weight cobalt ⁷Cashew nut shell oil modified phenol novolac resin as SP6700™ from Schenectady ⁸Wingstay 100^{™} from The Goodyear Tire & Rubber Company ⁹Insoluble sulfur, 80 percent active ¹⁰Hexamethoxymethylmelamine | |

The following Table 2 illustrates cure behavior and various physical properties of rubber Samples A through H based upon the basic recipe of Table 1.

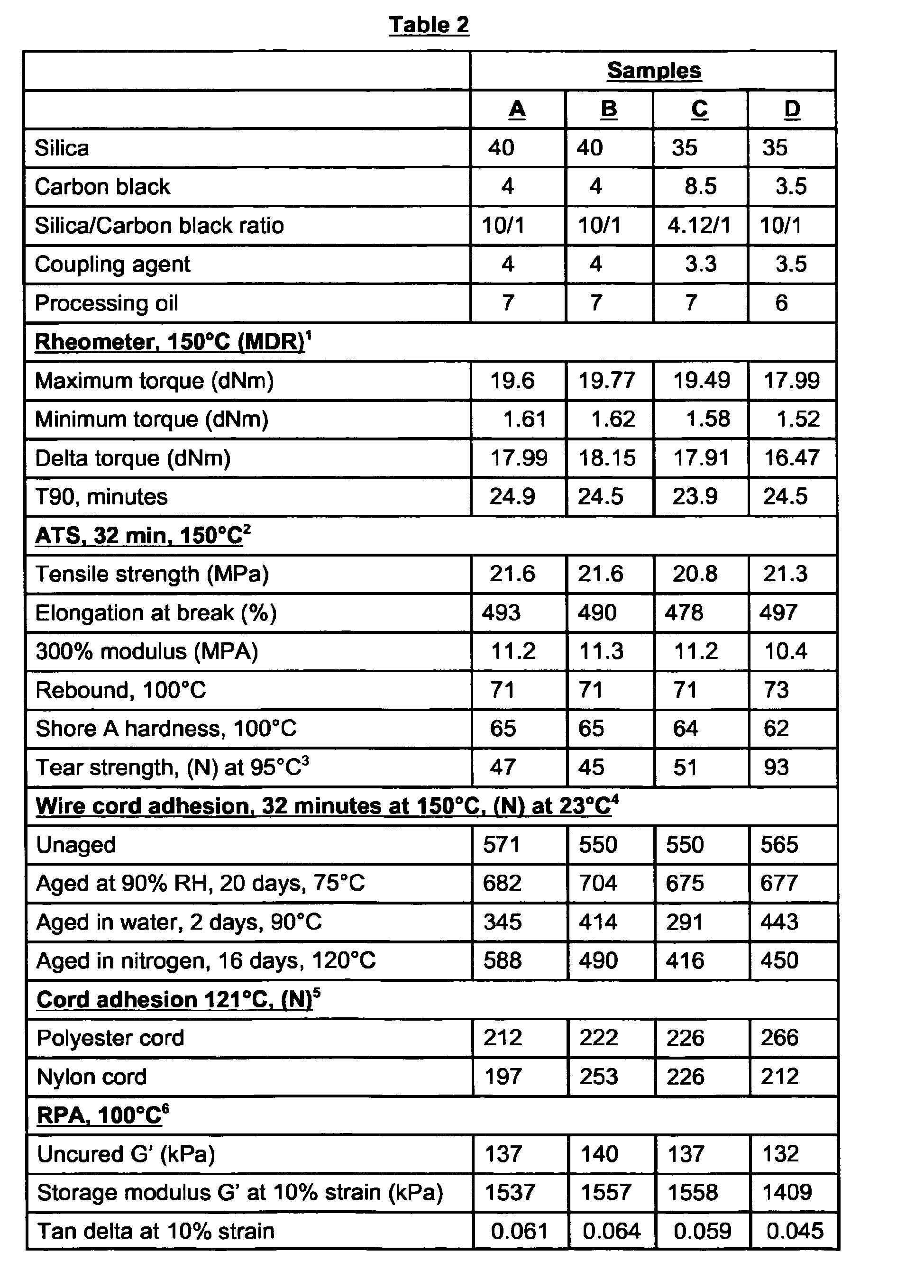

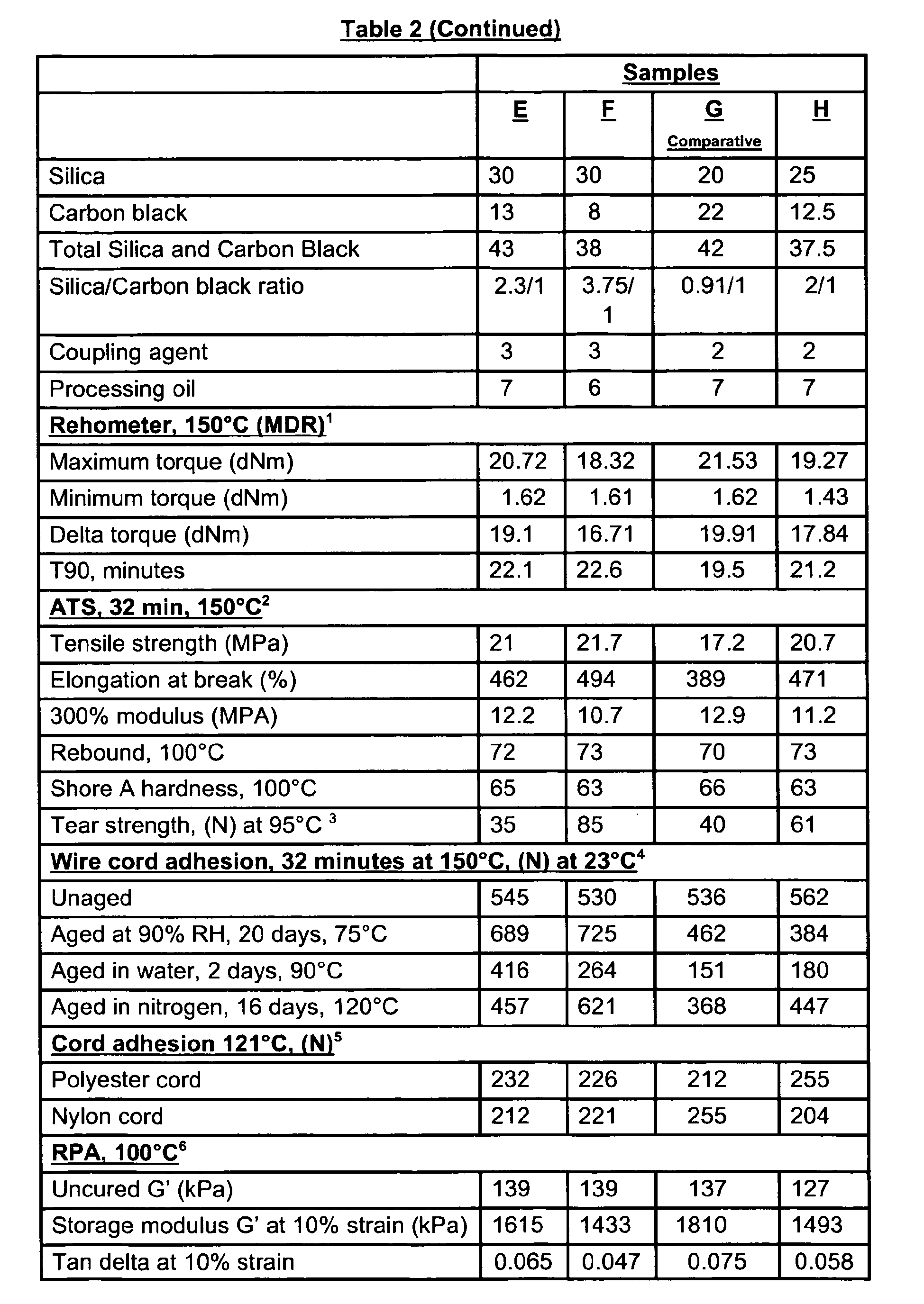

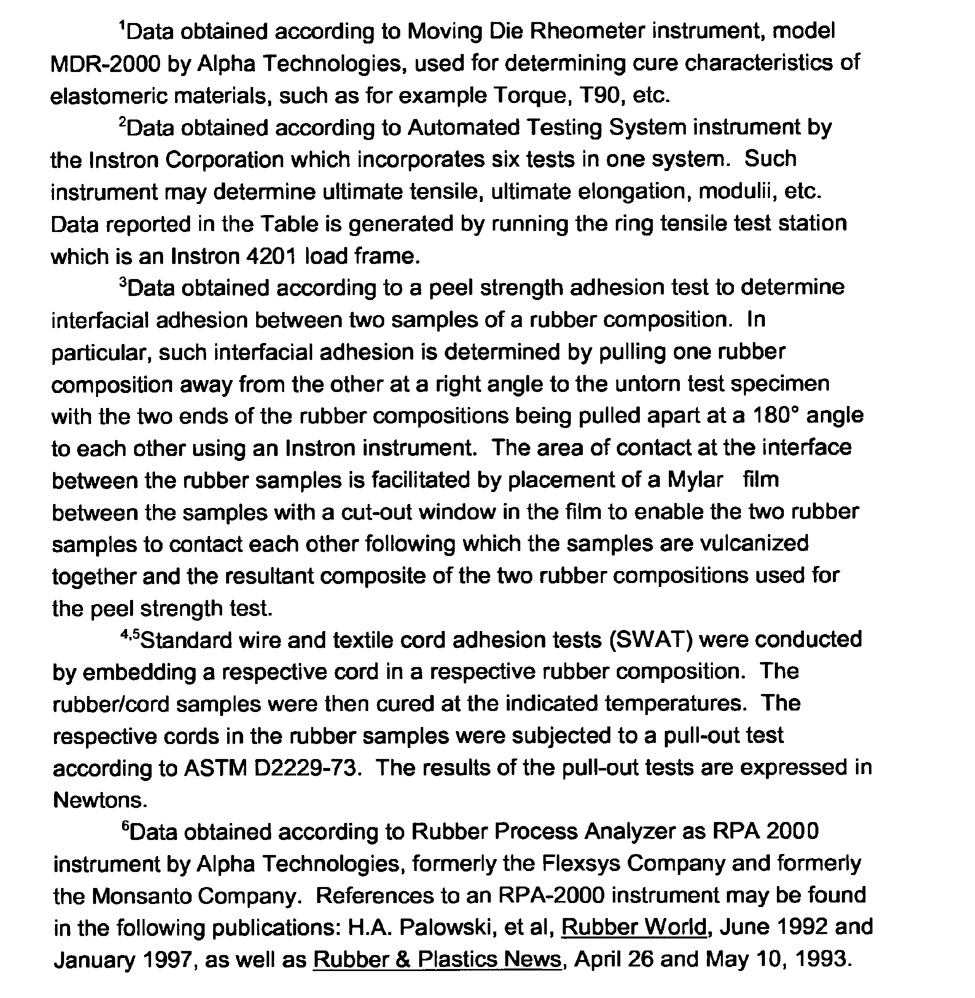

It can be seen from Table 2 that the Tear Strengths of Samples E and G are significantly lower than the Tear Strengths of Samples F and H.

It can be seen from Table 2 that the Wire Cord Adhesion (aged in water) values for Samples G and H are significantly lower than the corresponding aged in water wire cord adhesion for Samples E and G.

It can be seen from Table 2 that the Storage Modulus (G') at low strain for Sample G is significantly higher than the corresponding Storage Modulus (G') at low strain for Samples E, F and H

This is considered herein to be significant in that a Storage Modulus (G') at low strain is indication of a higher hysteresis for the rubber composition of Sample G and therefore an indication, as compared to Samples E, F and H that the silica/carbon black ratio for Sample G is too low.

It can be seen from Table 2 that the tan delta at low strain for Sample G, which contained is significantly higher than the corresponding tan delta at low strain for Samples E, F and H

This is considered herein to be significant in that a higher tan delta value at low strain is indication of a higher hysteresis for the rubber composition of Sample G and therefore an indication, as compared to Samples E, F and H that the silica/carbon black ratio for Sample G is too low.

Accordingly, it is concluded herein that, for the rubber composition for the cord reinforced rubber composite of this invention, the weight ratio of the precipitated silica to rubber reinforcing carbon black should be in a range greater than 2/1 and more preferably greater than 3/1.

### EXAMPLE II

Rubber samples were prepared to evaluate the significance of the inclusion of the methylene acceptor, methylene donor, metaphenylene bismaleimide, coupling agent and cobalt salt in the rubber composition for the cord reinforced rubber composite.

The rubber samples are reported herein as rubber Sample I and comparative Samples J through N.

In particular, the methylene acceptor was omitted from Sample J; the methylene donor was omitted from Sample K; the methaphenylene bismallimide was omitted from Sample L; the coupling agent was omitted from Sample M and the cobalt salt was omitted from Sample N.

The optimized precipitated silica and rubber reinforcing carbon black content of 40 phr and weight ratio of 3/1 of Example I was used for Samples I through L and N. The amount of 37 phr and ratio of 4.29/1 was used for Sample M to reflect the absence of the carbon black which would have been contained in the omitted coupling agent composite for Sample M.

The rubber compositions were prepared a manner similar to Example I by blending the ingredients in an internal rubber mixer in a series of sequential mixing steps while sheeting out the rubber mixtures and cooling to a temperature below 40°C between mixing steps. The sequential mixing steps were comprised of a first non-productive mixing step followed by a second non-productive mixing step and thence by a productive mixing step (in which sulfur and accelerators were added).

The basic recipe for the rubber Sample I and comparative Samples J through N is presented in the following Table 3 presented in parts by weight.

**Table 3**

| **First Non-Productive Mixing Step (mixed to 150°C)** | **Parts** |
|---|---|
| Natural cis 1,4-polyisoprene rubber | 100 |
| Carbon black¹ | variable |
| Silica² | 30 |
| Silica coupling agent³ | 0 or 3 |
| Processing oil⁴ | 4 |
| Fatty acid⁵ | 2 |
| Zinc oxide | 4 |
| Cobalt salt⁶ | 0 or 2 |
| Methylene acceptor⁷ | 0 or 2 |

| **Second Non-Productive Mixing Step (mixed to 160°C)** | |
|---|---|
| Rubber from first non-productive mixing step | variable |
| Carbon black¹ | 5 |
| Processing oil⁴ | 3 |

| **Productive Mixing Step (mixed to 108°C)** | |
|---|---|
| Antioxidant⁸ | 0.75 |
| Zinc oxide | 3 |
| Sulfur⁹ | 5 |
| Sulfenamide accelerator | 1.1 |
| Metaphenylene bismaleimide | 0 or 2 |
| Methylene donor¹⁰ | 0 or 2.8 |

The above numerically referenced ingredients are the same as the corresponding numerically referenced ingredients of Table 1.

The following Table 4 illustrates cure behavior and various physical properties of rubber compositions based upon the basic recipe of Table 3 and reported herein for rubber Sample I and comparative Samples J through N.

**Table 4**

| | **Samples** | | | | | |
|---|---|---|---|---|---|---|
| | **I** | **J** | **K** | **L** | **M** | **N** |
| Silica | 30 | 30 | 30 | 30 | 30 | 30 |
| Carbon black | 10 | 10 | 10 | 10 | 7 | 10 |
| Silica/carbon black weight ratio | 3/1 | 3/1 | 3/1 | 3/1 | 4.3/1 | 3/1 |
| Methylene acceptor compound | 2 | 0 2 | 2 | 2 | 2 | 2 |
| Methylene donor compound | 2.8 | 2.8 | 0 | 2.8 | 2.8 | 2.8 |
| Metaphenylene bismaleimide | 2 | 2 | 2 | 0 | 2 | 2 |
| Coupling agent | 3 | 3 | 3 | 3 | 0 | 3 |
| Cobalt salt | 2 | 2 | 2 | 2 | 2 | 0 |

| **Rheometer, 150°C (MDR)¹** | | | | | | |
|---|---|---|---|---|---|---|
| Maximum torque (dNm) | 18.42 | 19.29 | 16.82 | 16.6 | 15.47 | 17.87 |
| Minimum torque (dNm) | 1.53 | 1.3 | 1.73 | 1.7 | 1.67 | 2.02 |
| Delta torque (dNm) | 16.89 | 17.99 | 15.09 | 14.9 | 13.8 | 15.85 |
| T90, minutes | 21.88 | 18.6 | 19.53 | 20.85 | 21.71 | 27.66 |

| **ATS, 32 minutes 150°C²** | | | | | | |
|---|---|---|---|---|---|---|
| Tensile strength (MPa) | 23.2 | 22.7 | 23.6 | 23.3 | 23.5 | 23.7 |
| Elongation at break (%) | 541 | 498 | 569 | 576 | 579 | 575 |
| 300% modulus (MPa) | 9.28 | 10.99 | 8.33 | 8.2 | 7.04 | 8.04 |
| **Rebound, 100°C** | 72 | 75 | 73 | 72 | 75 | 72 |
| Shore A Hardness, 100°C | 60 | 62 | 57 | 58 | 54 | 56 |
| Tear strength, (N) at 95°C³ | 74 | 43 | 81 | 130 | 78 | 164 |

| **Wire cord adhesion, 32 minutes 150°C, (N) at 23°C⁴** | | | | | | |
|---|---|---|---|---|---|---|
| Unaged | 504 | 488 | 464 | 434 | 525 | 503 |
| Aged at 90% RH, 20 days, 75°C | 655 | 593 | 631 | 634 | 592 | 684 |
| Aged in water, 2 days, 90°C | 477 | 368 | 461 | 501 | 435 | 718 |
| Aged in nitrogen, 16 days, 120°C | 745 | 715 | 571 | 627 | 575 | 803 |

| **Cord adhesion, 121°C (N)⁵** | | | | | | |
|---|---|---|---|---|---|---|
| Polyester cord | 204 | 243 | 291 | 203 | 247 | 230 |
| Nylon cord | 244 | 198 | 226 | 213 | 191 | 268 |

| **RPA, 100°C⁶** | | | | | | |
|---|---|---|---|---|---|---|
| Uncured G'(kPa) | 133 | 117 | 151 | 144 | 148 | 179 |
| Storage modulus G', at 10% strain (kPa) | 1525 | 1580 | 1374 | 1400 | 1240 | 1390 |
| Tan delta at 10% strain | 0.057 | 0.0528 | 0.058 | 0.063 | 0.054 | 0.063 |

The above numerically referenced tests are the same as the corresponding numerically referenced tests of Table 2.

It can be seen from Table 4 that the Shore A hardness values for Comparative Samples K through N, in which the methylene donor, metaphenylene bismaleimide, coupling agent and cobalt salt were individually respectively omitted, were significantly lower than the Shore A hardness value for Samples I and Comparative Sample J.

This is considered herein to be significant in the sense of illustrating the significance of the inclusion of the combination of the methylene donor, methphenylene bismaldimide, coupling agent and cobalt salt in the rubber composition for the cord reinforced rubber composite for the Shore A hardness property.

It can be seen from Table 4 that the Tear Strength property for Comparative Sample J, in which the methylene acceptor was omitted, was significantly lower than the Tear Strength properties for Sample I and Comparative Samples K through N.

This is considered herein to be significant in the sense of illustrating the significance of the inclusion of the methylene acceptor in the rubber composition for the cord reinforced rubber composite for the Tear Strength property.

It can be seen from Table 4 that the Wire Cord Adhesion (water aged) property for Comparative Sample J, in which the methylene acceptor was omitted, was significantly lower than the Wire Cord Adhesion (water aged) properties for Sample I and Comparative Samples K through N.

This is considered herein to be significant in the sense of illustrating the significance of the inclusion of the methylene acceptor in the rubber composition for the cord reinforced rubber composite for the Wire Cord Adhesion property.

It can be seen from Table 4 that the Nylon cord Adhesion properties for Comparative Samples J and M, in which the methylene acceptor (Comparative Sample J) and the coupling agent (Comparative Sample M) were individually respectively omitted, were significantly lower than the Nylon Cord Adhesion properties for Sample I and Comparative Samples K, L and N.

This is considered herein to be significant in the sense of illustrating the significance of the inclusion of the methylene acceptor and coupling agent in the rubber composition for the cord reinforced rubber composite for the Nylon Cord Adhesion property.

It can be seen from Table 4 that the Storage Modulus (G') at low strain properties for Comparative Samples K through N, in which each of the methylene donor, methaphenylene bismaleimide, coupling and cobalt salt were individually selectively omitted from the respective Comparative Samples, were significantly lower than the Storage Modulus (G') at low strain properties for Sample I and Comparative Sample J.

This is considered herein to be significant in the sense of illustrating the significance of the inclusion of the methylene donor, methaphenylene bismaleimide, coupling and cobalt salt in the rubber composition for the cord reinforced rubber composite for the Storage Modulus (G') at low strain property.

Accordingly, it is concluded herein that, for the rubber composition for the cord reinforced rubber composite of this invention, an inclusion of a combination of the methylene acceptor, methylene donor, methaphenylene bismaleimide, coupling and cobalt salt in the rubber composition for the cord reinforced rubber composite is significantly beneficial for the rubber composition for the cord reinforced rubber composite insofar as the indicated physical properties are concerned.

## Claims

1. A tire having at least one internal component, exclusive of an outer surface of the tire, comprising a composite comprising a cord reinforced natural rubber-rich rubber composition, where said composite comprises:
(A) a rubber composition comprising, based upon parts by weight per 100 parts by weight rubber (phr):
(1) at least one conjugated diene-based rubber comprising:
(a) from 60 to 100 phr of cis 1,4-polyisoprene rubber, and
(b) from zero to 40 phr of at least one additional rubber selected from cis 1,4-polybutadiene rubber, styrene/butadiene copolymer rubber and medium vinyl polybutadiene rubber having a vinyl 1,2-content in a range of from 30 to 80 percent and trans 1,4-polybutadiene rubber having a trans 1,4-isomeric content in a range of from 50 to 80 percent,
(2) from 25 to 55 phr of reinforcing filler comprising:
(a) from 20 to 48 phr of precipitated silica,
(b) from 2 to 20 phr of rubber reinforcing carbon black; wherein the weight ratio of said precipitated silica and said rubber reinforcing carbon black is in a range of from 2/1 to 10/1, and
(c) a coupling agent for said silica having a moiety reactive with hydroxyl groups on said precipitated silica and another different moiety interactive with said conjugated diene based rubber(s),
(d) a resinous reaction product of a methylene donor compound comprising hexamethoxymethylmelamine and a methylene acceptor compound,
(e) cobalt salt selected from at least one of cobalt naphthenate, cobalt salts of fatty acids, cobalt salts of aliphatic or alicyclic carboxylic acids having from 6 to 30 carbon atoms; cobalt neodecanoate; cobalt chloride; cobalt carboxylate and organo-cobalt-boron complexes, and
(f) metaphenylene bismaleimide,
(B) at least one cord encapsulated by said rubber composition, wherein said cord(s) individually comprise at least one filament,
wherein said filament(s) of said cord individually comprise at least one filament comprising steel or brass coated steel.

2. The tire of claim 1, wherein said conjugated diene-based elastomer is cis 1,4-polyisoprene rubber and said cobalt salt is cobalt naphthenate.

3. The tire of claim 1 or 2, wherein said cords are composed of a plurality of twisted filaments.

4. The tire of at least one of the previous claims, wherein said rubber composition additionally contains from 2 to 15 phr of at least one of starch/plasticizer composite and exfoliated clay platelets derived from intercalated clay comprised of montmorillonite clay.

5. The tire of at least one of the previous claims, wherein said tire component is selected from at least one of carcass ply, circumferential belt ply underlying a circumferential tire tread and overlay ply underlying a circumferential tire tread.

6. The tire of at least one of the previous claims, wherein said cord of said reinforced rubber composite is a plurality of cords aligned substantially parallel to each other and comprises at least one brass steel coated filament.

7. The tire of at least one of the previous claims, **characterized in that**, for said rubber composition, the methylene donor compound comprises hexamethoxymethylmelamine and the methylene acceptor comprises at least one of resorcinol, resorcinolic derivative, cashew nut oil modified phenol novolak resin, tall oil modified phenol novolak resin or alkyl modified phenol novolak resin.

8. The tire of claim 7, wherein the amount of the methylene donor compound for said resinous product of methylene donor and methylene acceptor is in a range of from 0.5 to 4 phr, the amount of methylene acceptor is in a range of from 0.5 to 5 phr and the weight ratio of methylene acceptor compound to methylene donor compound is in a range of from 5/1 to 1/5.

9. The tire of at least one of the previous claims, wherein said rubber composition of said cord reinforced rubber composite has a dynamic loss modulus (G') at a low strain (10 percent) and 100°C in a range of from 1400 to 2000 MPa, and a Shore A hardness (100°C) in a range of from 60 to 70.

10. The tire of at least one of the previous claims, wherein said rubber composition of said cord reinforced rubber composite has a hot rebound property (100°C) in a range of from 65 to 85.

## Patentansprüche

1. Reifen mit mindestens einem inneren Bauteil, unter Ausschluss einer Außenfläche des Reifens, umfassend einen Verbundwerkstoff, der eine kordverstärkte, naturkautschukreiche Kautschukzusammensetzung umfasst, wobei der Verbundwerkstoff umfasst:
(A) eine Kautschukzusammensetzung, umfassend, auf Basis von Gewichtsteilen je 100 Gewichtsteile Kautschuk (ThK):
(1) mindestens einen Kautschuk auf Basis konjugierten Diens, umfassend:
(a) 60 bis 100 ThK cis-1,4-Polyisoprenkautschuk, und
(b) Null bis 40 ThK mindestens eines zusätzlichen Kautschuks, ausgewählt aus cis-1,4-Polybutadienkautschuk, StyrolButadien-Copolymer-Kautschuk und Polybutadienkautschuk mit mittlerem Vinylgehalt mit einem Vinyl-1,2-Gehalt in einem Bereich von 30 bis 80 Prozent, und trans-1,4-Polybutadienkautschuk mit einem trans-1,4-Isomergehalt in einem Bereich von 50 bis 80 Prozent,
(2) 25 bis 55 ThK Verstärkungsfüllstoff, umfassend:
(a) 20 bis 48 ThK ausgefälltes Silika,
(b) 2 bis 20 ThK Kautschukverstärkungs-Carbon Black;
wobei das Gewichtsverhältnis des ausgefällten Silikas und des Kautschukverstärkungs-Carbon Blacks in einem Bereich von 2:1 bis 10:1 liegt, und
(c) einen Haftvermittler für das Silika mit einem Anteil, der mit Hydroxylgruppen an dem ausgefällten Silika reaktiv ist, und einem anderen, verschiedenen Anteil, der mit dem bzw. den Kautschuk(en) auf Basis konjugierten Diens in Wechselwirkung tritt,
(d) ein harzartiges Reaktionsprodukt einer Hexamethoxymethylmelamin umfassenden Methylendonatorverbindung und einer Methylenakzeptorverbindung,
(e) Kobaltsalz, ausgewählt aus mindestens einem von Kobaltnaphthenat, Kobaltsalzen von Fettsäuren, Kobaltsalzen aliphatischer oder alizyklischer Carbonsäuren mit 6 bis 30 Kohlenstoffatomen; Kobaltneodecanoat; Kobaltchlorid; Kobaltcarboxylat und Organokobaltborkomplexen, und
(f) Metaphenylenbismaleimid,
(B) mindestens einen durch besagte Kautschukverbindung eingekapselten Kord, wobei der Kord bzw. die Korde individuell mindestens ein Filament umfassen,
wobei das bzw. die Filament(e) des Kords individuell mindestens ein Filament umfassen, das Stahl oder messingbeschichteten Stahl umfasst.

2. Reifen nach Anspruch 1, wobei das Elastomer auf Basis konjugierten Diens cis-1,4-Polyisoprenkautschuk ist und das Kobaltsalz Kobaltnaphthenat ist.

3. Reifen nach Anspruch 1 oder 2, wobei die Korde aus einer Vielzahl verdrillter Filamente zusammengesetzt sind.

4. Reifen nach mindestens einem der vorgenannten Ansprüche, wobei die Kautschukzusammensetzung zusätzlich 2 bis 15 ThK von mindestens einem von Stärke-Weichmacher-Verbundwerkstoff und Blähtonplättchen, die von interkaliertem Ton stammen, der aus Montmorillonit-Ton besteht, enthält.

5. Reifen nach mindestens einem der vorgenannten Ansprüche, wobei das Reifenbauteil aus mindestens einem von Karkassenlage, umfangsgerichteter Gürtellage, die unter einer umfangsgerichteten Reifenlauffläche liegt, und Overlaylage, die unter einer umfangsgerichteten Reifenlauffläche liegt, ausgewählt ist.

6. Reifen nach mindestens einem der vorgenannten Ansprüche, wobei der Kord des verstärkten Kautschukverbundwerkstoffs eine Vielzahl von im Wesentlichen parallel zueinander ausgerichteten Korden darstellt und mindestens ein messingbeschichtetes Stahlfilament umfasst.

7. Reifen nach mindestens einem der vorgenannten Ansprüche, **dadurch gekennzeichnet, dass** für die Kautschukzusammensetzung die Methylendonatorverbindung Hexamethoxymethylmelamin umfasst und der Methylenakzeptor mindestens eines von Resorcinol, Resorcinol-Derivat, Cashewnussöl-modifiziertem Phenol-Novolakharz, Tallöl-modifiziertem Phenol-Novolakharz oder Alkyl-modifiziertem Phenol-Novolakharz umfasst.

8. Reifen nach Anspruch 7, wobei die Menge an Methylendonatorverbindung für das harzartige Produkt von Methylendonator und Methylenakzeptor in einem Bereich von 0,5 bis 4 ThK liegt, die Menge an Methylenakzeptor in einem Bereich von 0,5 bis 5 ThK liegt und das Gewichtsverhältnis von Methylenakzeptorverbindung zu Methylendonatorverbindung in einem Bereich von 5:1 bis 1:5 liegt.

9. Reifen nach mindestens einem der vorgenannten Ansprüche, wobei die Kautschukzusammensetzung des kordverstärkten Kautschukverbundwerkstoffs einen dynamischen Verlustmodul (G') bei einer niedrigen Belastung (10 Prozent) und 100°C in einem Bereich von 1400 bis 2000 MPa und eine Shore-A-Härte (100°C) in einem Bereich von 60 bis 70 aufweist.

10. Reifen nach mindestens einem der vorgenannten Ansprüche, wobei die Kautschukzusammensetzung des kordverstärkten Kautschukverbundwerkstoffs eine Heißrückpralleigenschaft (100°C) in einem Bereich von 65 bis 85 aufweist.

## Revendications

1. Bandage pneumatique possédant au moins un composant interne, à l'exclusion de la surface externe du bandage pneumatique, comprenant un composite comprenant une composition de caoutchouc riche en caoutchouc naturel, renforcée avec des câblés, ledit composite comprenant :
(A) une composition de caoutchouc comprenant, basées sur des parties en poids par 100 parties en poids de caoutchouc (phr) :
(1) au moins un caoutchouc à base de diène conjugué, comprenant :
(a) à concurrence de 60 à 100 phr, du caoutchouc de cis 1,4-polyisoprène ; et
(b) à concurrence de 0 à 40 phr, au moins un caoutchouc supplémentaire choisi parmi un caoutchouc de cis 1,4-polybutadiène, un caoutchouc de copolymères de styrène/butadiène et un caoutchouc de polybutadiène à teneur moyenne en vinyle possédant une teneur en groupes vinyle 1,2 dans la plage de 30 à 80 %, et du caoutchouc de trans 1,4-polybutadiène possédant une teneur en isomère trans 1,4 dans la plage de 50 à 80 % ;
(2) à concurrence de 25 à 55 phr, une matière de charge pour le renforcement, comprenant :
(a) à concurrence de 20 à 48 phr, de la silice précipitée ;
(b) à concurrence de 2 à 20 phr, du noir de carbone pour le renforcement du caoutchouc ; le rapport pondéral de ladite silice précipitée et dudit noir de carbone pour le renforcement du caoutchouc se situant dans la plage de 2/1 à 10/1 ; et
(c) un agent de couplage pour ladite silice possédant une fraction apte à réagir avec des groupes hydroxyle sur ladite silice précipitée et une autre fraction différente qui entre en interaction avec ledit caoutchouc à base de diène conjugué ;
(d) un produit réactionnel résineux d'un composé cédant des groupes méthylène comprenant de l'hexaméthoxyméthylmélamine et un composé acceptant les groupes méthylène ;
(e) un sel de cobalt comprenant au moins un membre choisi parmi le groupe comprenant du naphténate de cobalt, des sels de cobalt d'acides gras, des sels de cobalt d'acides carboxyliques aliphatiques ou alicycliques contenant de 6 à 30 atomes de carbone, le néodécanoate de cobalt, le chlorure de cobalt, le carboxylate de cobalt et des complexes d'organocobalt-bore ; et
(f) le métaphénylène bismaléimide ;
(B) au moins un câblé encapsulé dans ladite composition de caoutchouc, lesdits câblés comprenant de manière individuelle au moins un filament ;
dans lequel lesdits filaments desdits câblés comprennent de manière individuelle au moins un filament comprenant de l'acier ou de l'acier laitonné.

2. Bandage pneumatique selon la revendication 1, dans lequel ledit élastomère à base de diène conjugué est du caoutchouc de cis 1,4-polyisoprène et ledit sel de cobalt est du naphténate de cobalt.

3. Bandage pneumatique selon la revendication 1 ou 2, dans lequel lesdits câblés se composent de plusieurs filaments torsadés.

4. Bandage pneumatique selon au moins une des revendications précédentes, dans lequel ladite composition de caoutchouc contient en outre, à concurrence de 2 à 15 phr, au moins un membre choisi parmi le groupe comprenant un composite d'amidon/plastifiant et des plaquettes d'argile exfolié qui dérivent d'argile intercalaire comprenant de l'argile de montmorillonite.

5. Bandage pneumatique selon au moins une des revendications précédentes, dans lequel ledit composant de bandage pneumatique représente au moins un membre choisi parmi le groupe comprenant une nappe de carcasse, une ceinture circonférentielle sous-jacente à la bande de roulement circonférentielle du bandage pneumatique et une nappe de recouvrement sous-jacente à la bande de roulement circonférentielle du bandage pneumatique.

6. Bandage pneumatique selon au moins une des revendications précédentes, dans lequel ledit câblé dudit composite en caoutchouc renforcé représente plusieurs câblés disposés en alignement essentiellement parallèle les uns aux autres et comprend au moins un filament enrobé d'acier au laiton.

7. Bandage pneumatique selon au moins une des revendications précédentes, **caractérisé en ce que**, pour ladite composition de caoutchouc, le composé cédant des groupes méthylène comprend de l'hexaméthoxyméthylmélamine et l'accepteur de groupes méthylène comprend au moins un membre choisi parmi le groupe comprenant du résorcinol, un dérivé de résorcinol, de la résine de phénol novolaque modifiée avec de l'huile de noix de cajou, de la résine de phénol novolaque modifiée avec du tallol ou bien de la résine de phénol novolaque modifiée avec un ou plusieurs groupes alkyle.

8. Bandage pneumatique selon la revendication 7, dans lequel la quantité du composé cédant des groupes méthylène pour ledit produit résineux du composé cédant des groupes méthylène et du composé acceptant les groupes méthylène se situe dans la plage de 0,5 à 4 phr, et le rapport pondéral du composé cédant des groupes méthylène au composé acceptant les groupes méthylène se situe dans la plage de 5/1 à 1/5.

9. Bandage pneumatique selon au moins une des revendications précédentes, dans lequel ladite composition de caoutchouc dudit composite de caoutchouc renforcé avec des câblés possède un module de perte dynamique (G') à une faible déformation (10 %) et à 100 °C, dans la plage de 1400 à 2000 MPa, et une dureté Shore A (à 100 °C) dans la plage de 60 à 70.

10. Bandage pneumatique selon au moins une des revendications précédentes, dans lequel ladite composition de caoutchouc dudit composite de caoutchouc renforcé avec des câblés possède une propriété de rebond à chaud (à 100 °C) dans la plage de 65 à 85.
